# FASCICULE DE BREVET EUROPEEN

(11) **EP 0 455 920 B1**
(45) Date de publication et mention de la délivrance du brevet: **26.01.1994**
(21) Numéro de dépôt: 90403795.9
(22) Date de dépôt: 28.12.1990
(51) Int. Cl.: F17C 13/06

(54) **Structure de protection d'un robinet de conteneur de gaz toxique**
Schutzvorrichtung am Ventil eines Giftgasbehälters
Protection device for the valve of a toxic gas container

(30) Priorité: 09.05.1990 FR 9005778
(43) Date de publication de la demande: 13.11.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Libes, Jean-Louis, F-77440 Congis-Sur-Therrouannes (FR); Laureau, Georges, F-94500 Champigny-sur-Marne (FR)
(74) Mandataire: Le Moenner, Gabriel

(56) Documents cités:
- EP-A- 0 272 363
- DE-U- 8 403 607
- US-A- 1 413 502
- US-A- 3 848 768
- US-A- 4 483 163
- US-A- 4 624 495
- US-A- 4 729 488

## Description

La présente invention concerne les structures de protection de robinets de conteneurs transportables de gaz toxiques, du type comprenant un chapeau métallique cylindrique monté de façon déverrouillable sur le conteneur, autour du robinet, voir par example US-A-4483163.

Pour le transport de conteneurs, typiquement de bouteilles, contenant des gaz toxiques, en particulier l'arsine ou la phosphine, les mesures de sécurité ont conduit à disposer, tout autour du robinet de distribution du gaz contenu dans le conteneur, un chapeau, de configuration générale cylindrique, réalisé par emboutissage d'une tôle métallique et vissé sur une virole solidarisée au conteneur au niveau de la base du robinet. Pour compléter cette protection on a également proposé de disposer les conteneurs, durant leur transport, dans des paniers renforcés pouvant contenir un ou plusieurs conteneurs et comportant une porte verrouillable, suivant un agencement lourd, délicat à mettre en oeuvre, et obérant considérablement les frais de transport du gaz.

La demanderesse a constaté, à l'examen de rapports d'accidents et d'incidents résultant de chutes de conteneurs, notamment depuis le plateau d'un camion roulant à 80 Km/h, que les risques de fuite ne se produisaient jamais en raison d'une rupture ou de la fissure du conteneur lui-même, mais toujours en raison d'endommagements au niveau du robinet.

La présente invention a en conséquence pour objet de proposer une structure de protection d'un robinet de conteneur de gaz toxique, de structure simple, de faibles coûts de fabrication et d'utilisation, aisément réutilisable et donnant d'excellents résultats pour une très grande gamme de mauvaises conditions d'utilisation ou de chutes intempestives.

Pour ce faire, selon une caractéristique de l'invention, la structure de protection comprend une coiffe en matériau absorbant les chocs montée de façon déverrouillable sur le chapeau métallique et enfermant complètement ce dernier.

Selon un aspect plus particulier de l'invention, la coiffe comporte une partie principale de configuration généralement tubulaire ayant une extrémité fermée par un fond et une extrémité opposée ouverte s'évasant vers l'extérieur de façon à s'étendre, en position de montage sur le conteneur, à recouvrement sur une zone périphérique du conteneur adjacente au pied du chapeau.

D'autres caractéristiques et avantages de la présente invention ressortiront de la description suivante d'un mode de réalisation, donné à titre illustratif mais nullement limitatif, faite en relation avec les dessins annexés, sur lesquels :
- les figures 1 et 2 sont des vues respectivement de dessus et en élévation d'une coiffe de protection selon l'invention ;
- la figure 3 est une vue en coupe longitudinale suivant la ligne de coupe III-III de la figure 1 ;
- la figure 4 est une vue montrant la coiffe en position sur une tête de bouteille de gaz.

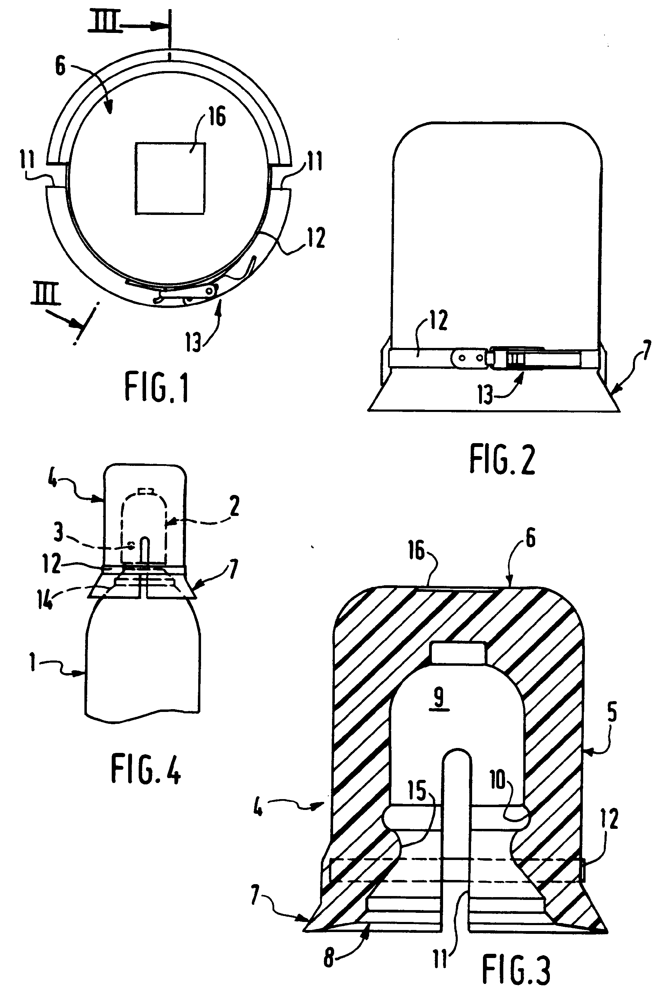

En référence à la figure 4, on reconnaît un conteneur de gaz, en l'occurence une bouteille 1, sur la tête duquel est mis en place, de façon connue, un chapeau métallique 2 entourant complètement le robinet de distribution de gaz du conteneur et pourvu, au voisinage de sa base, d'au moins un évent 3 pour permettre le vissage du chapeau sur le col de la bouteille et pour tenir compte des variations de température de l'air contenu dans le chapeau.

Conformément à l'invention, la structure de protection est complétée par une coiffe 4 comportant, comme on le voit mieux sur la figure 3, une partie principale 5 de configuration générale tubulaire fermée à une extrémité par un fond 6 et une extrémité opposée ouverte s'évasant vers l'extérieur en forme de jupe 7, ménageant une ouverture profilée 8 d'accès à un logement intérieur 9 conformé de façon à épouser sensiblement les contours extérieurs du chapeau 2. Le logement 9 comporte une rainure annulaire s'étendant radialement vers l'extérieur 10, destinée à venir en regard de l'évent 3 du chapeau 2. La paroi latérale de la coiffe 4 est entaillée par au moins une, typiquement deux fentes diamétralement opposées 11 débouchant dans l'extrémité évasée 7 et s'étendant axialement jusqu'à sensiblement la moitié de la hauteur de la coiffe 4.

Cette dernière comporte, au niveau de la zone de raccordement entre la partie principale 5 et la zone d'extrémité 7, un moyen de cerclage comportant une bande de cerclage 12 dont une portion d'arc est noyée dans l'épaisseur de la paroi de la coiffe, comme on le voit bien sur la figure 1, et un dispositif réglable de serrage à levier 13, dans un agencement rendu ainsi imperdable.

Comme on le voit bien sur la figure 4, la coiffe 4 est introduite légèrement à force sur le chapeau 2 jusqu'à ce que l'extrémité supérieure de ce dernier vienne porter contre la partie de fond 6 de la coiffe, avec la face intérieure 8 de la zone d'extrémité 7 venant en appui contre la zone périphérique, ou ogive, 14 du conteneur adjacente au chapeau 2, après quoi le moyen de cerclage 12,13 est mis en oeuvre pour resserrer la base de la coiffe et garantir, au moyen de saillies radiales internes 15 coopérant avec l'embase du chapeau 2, un verrouillage de la coiffe 4 sur le chapeau 2 et un contact sous pression de la zone d'extrémité 7 sur l'ogive 14, en protégeant ainsi contre les chocs toute la zone de tête du conteneur 1.

La coiffe 4 est avantageusement réalisée d'une seule pièce en un matériau thermo-plastique résistant aux chocs, par exemple en mousse de polypropylène, ou de préférence en mousse de polyuréthanne haute densité avec une peau micro-poreuse formée au moulage au moins sur la paroi extérieure de la coiffe. L'épaisseur moyenne de la coiffe est de l'ordre de 40 à 45 mm.

Des essais de chute de bouteilles équipées d'une telle coiffe à partir du plateau situé à 1,55 mètres du sol, d'un camion roulant à 80 Km/h ont démontré l'efficacité de cette structure de protection. La coiffe 4, de faible poids (inférieur à un kilo), n'augmente quasiment pas l'encombrement général du conteneur, est très facile à mettre en place et à retirer, est réutilisable un grand nombre de fois, ne nécessite pas d'entretien, ne cache pas les incriptions apposées sur le conteneur et permet le moulage dans la masse dans la partie de fond 6 d'un sigle de producteur ou de distributeur 16.

La structure de protection selon l'invention convient tout particulièrement pour le transport par conteneur de gaz extrèmement toxiques tels que l'arsine, la phosphine, le germane, l'hydrogène sélenié, le diborane, le chlore, le cyanure d'hydrogène ou encore le sulfure d'hydrogène, le chlorure d'hydrogène.

## Revendications

1. Structure de protection d'un robinet de conteneur transportable de gaz toxique, comprenant un chapeau métallique cylindrique (2) monté de façon déverrouillable sur le conteneur (1), autour du robinet, et une coiffe (4) montée sur le chapeau (2) et enfermant ce dernier, caractérisé en ce que la coiffe (4) est réalisée en matériau cellulaire absorbant les chocs et est montée de façon déverrouillable sur le chapeau (2), en contact avec ce dernier.

2. Structure selon la revendication 1, caractérisée en ce que la coiffe (4) comporte une partie principale de configuration générale tubulaire (5) ayant une extrémité fermée par un fond (6) et une extrémité opposée ouverte (7) s'évasant vers l'extérieur de façon à s'étendre, en position de montage, à recouvrement sur une zone périphérique (14) du conteneur adjacente au chapeau (2).

3. Structure selon la revendication 2, caractérisée en ce que la coiffe (4) comporte un logement intérieur (9) épousant sensiblement les contours extérieurs du chapeau (2).

4. Structure selon la revendication 2, caractérisée en ce que le logement intérieur présente une zone d'entrée (8) épousant sensiblement la zone périphérique (14) du conteneur et se raccordant, vers l'intérieur du logement, par une saillie (15) s'étendant radialement vers l'intérieur.

5. Structure selon la revendication 4, caractérisée en ce que le logement intérieur (9) comporte une zone circulaire en retrait (10) en regard, en position de montage, d'un évent (8) du chapeau (2).

6. Structure selon l'une des revendications 2 à 5, caractérisée en ce que la coiffe (4) comporte, au niveau de la zone de raccordement entre la partie principale (5) et l'extrémité évasée (7), un moyen de cerclage (12, 13)

7. Structure selon la revendication 6, caractérisée en ce que la coiffe (4) comporte au moins une fente (11) s'étendant longitudinalement sur l'extrémité évasée (7) et une portion de la partie principale (5).

8. Structure selon l'une des revendications 6 ou 7, caractérisée en ce que le moyen de cerclage comporte une bande de cerclage (12) dont au moins une portion d'arc est noyée dans la paroi périphérique de la coiffe (4).

9. Structure selon l'une des revendications précédentes, caractérisée en ce que la coiffe (4) est réalisée d'une seule pièce en matériau plastique.

10. Structure selon la revendication 9, caractérisée en ce que la coiffe (4) est réalisée en mousse de polyuréthanne haute densité.

## Patentansprüche

1. Schutzvorrichtung für ein Ventil eines transportablen Giftgasbehälters, mit einer zylindrischen Kappe (2), die entriegelbar auf dem Behälter (1), das Ventil umgebend, angebracht ist, und mit einer Haube (4), die auf der Kappe (2), diese umschließend, angebracht ist, dadurch gekennzeichnet, daß die Kappe (4) aus einem stoßabsorbierenden Schaummaterial besteht und lösbar auf der Kappe (2), in Kontakt mit dieser stehend, angebracht ist.

2. Vorrichtung nach Anspruch 1, dadurch gekennzeichnet, daß die Haube (4) einen allgemein rohrförmigen Hauptabschnitt (5) umfaßt, der ein durch einen Boden (6) verschlossenes Ende und ein diesem gegenüberliegendes offenes Ende (7) aufweist, das sich nach außen derart erweitert, daß es in der Montagestellung einen der Kappe (2) benachbarten Behälterumfangsbereich (14) überlappt.

3. Vorrichtung nach Anspruch 2, dadurch gekennzeichnet, daß die Haube (4) eine Innenkammer (9) umfaßt, die an die Außenkonturen der Kappe (2) angepaßt ist.

4. Vorrichtung nach Anspruch 3, dadurch gekennzeichnet, daß die Innenkammer einen Zugangsbereich (8) aufweist, der an den Behälterumfangsbereich (14) angepaßt ist und über eine sich radial nach innen erstreckende Schulter (15) in die Innenkammer übergeht.

5. Vorrichtung nach Anspruch 4, dadurch gekennzeichnet, daß die Innenkammer (9) einen kreisförmigen Rücksprung (10) umfaßt, der im montierten Zustand einem Lüftungsloch (8) der Kappe (2) gegenüberliegt.

6. Vorrichtung nach einem der Ansprüche 2 bis 5, dadurch gekennzeichnet, daß die Haube (4) in Höhe der Verbindung zwischen dem Hauptteil (5) und dem erweiterten Ende (7) eine Spanneinrichtung (12, 13) umfaßt.

7. Vorrichtung nach Anspruch 6, dadurch gekennzeichnet, daß die Haube (4) wenigstens einen Schlitz (11) umfaßt, der sich längs über das erweiterte Ende (7) und einen Teil des Hauptabschnitts (5) erstreckt.

8. Vorrichtung nach einem der Ansprüche 6 oder 7, dadurch gekennzeichnet, daß die Spanneinrichtung ein Spannband (12) umfaßt, das wenigstens einen bogenförmigen Abschnitt umfaßt, der in die Umfangswand der Haube (4) eingelassen ist.

9. Vorrichtung nach einem der vorangehenden Ansprüche, dadurch gekennzeichnet, daß die Haube (4) einstückig aus einem Kunststoffmaterial besteht.

10. Vorrichtung nach Anspruch 9, dadurch gekennzeichnet, daß die Haube (4) aus geschäumtem, hochdichten Polyurethan besteht.

## Claims

1. Structure for protection of a valve of a transportable toxic gas container, comprising a cylindrical metal cap (2) mounted in unlockable manner on the container (1), around the valve, and a cover (4) mounted on the cap (2) and enclosing the latter, characterised in that the cover (4) is constructed in shock absorbent cellular material and is mounted in unlockable manner on the cap (2) in contact with the latter.

2. Structure according to Claim 1, characterised in that the cover (4) comprises a main part of tubular general configuration (5) having one end closed by a head (6) and an open opposite end (7) flaring outwards so as to extend, in assembled position, overlapping a peripheral zone (14) of the container adjacent to the cap (2).

3. Structure according to Claim 2, characterised in that the cover (4) comprises an internal housing (9) substantially fitting the outer contours of the cap (2).

4. Structure according to Claim 2, characterised in that the internal housing has an entry zone (8) substantially fitting the peripheral zone (14) of the container and blending, towards the interior of the housing, through a projection (15) extending radially inwards.

5. Structure according to Claim 4, characterised in that the internal housing (9) comprises a recessed circular zone (10) facing, in assembled position, a vent-hole (8) of the cap (2).

6. Structure according to any of Claims 2 to 5, characterised in that the cover (4) comprises at the level of the blend zone between the main part (5) and the flared end (7), a hooping means (12, 13).

7. Structure according to Claim 6, characterised in that the cover (4) comprises at least one slot (11) extending longitudinally over the flared end (7) and a portion of the main part (5).

8. Structure according to any of Claims 6 or 7, characterised in that the hooping means comprises a hooping band (12) of which at least one portion of arc is buried in the peripheral wall of the cover (4).

9. Structure according to any of the preceding claims, characterised in that the cover (4) is constructed in one single piece in plastics material.

10. Structure according to Claim 9, characterised in that the cap (4) is constructed in high density polyurethane foam.
